(19) Europäisches Patentamt
European Patent Office
Office européen des brevets

(11) **EP 3 967 490 A1**

(12) **EUROPEAN PATENT APPLICATION**

(43) Date of publication:
**16.03.2022 Bulletin 2022/11**

(21) Application number: **20195378.3**

(22) Date of filing: **09.09.2020**

(51) International Patent Classification (IPC):
***B32B 19/02*** *(2006.01)* ***B32B 19/06*** *(2006.01)*
***B32B 5/26*** *(2006.01)* ***C08J 5/24*** *(2006.01)*

(52) Cooperative Patent Classification (CPC):
**C08J 5/243; B32B 1/00; B32B 5/022; B32B 5/024; B32B 5/12; B32B 5/263; B32B 5/266; B32B 5/30; B32B 19/02; B32B 19/06; C08J 5/24; C08J 5/244; C08J 5/249;** B32B 2250/05; B32B 2250/40; (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Von Roll Schweiz AG**
**4226 Breitenbach (CH)**

(72) Inventors:
- **LENZI, Fiorenzo**
  **4242 Laufen (CH)**
- **MULLOT, Nicolas**
  **68510 Uffheim (FR)**
- **RUDIN, Markus**
  **4402 Frenkendorf (CH)**
- **MEIER, Dimitri**
  **8953 Dietikon (CH)**

(74) Representative: **Bohest AG**
**Holbeinstrasse 36-38**
**4051 Basel (CH)**

Remarks:
Claims 17 and 18 are deemed to be abandoned due to non-payment of the claims fees (Rule 45(3) EPC).

(54) **COMPOSITE MATERIALS WITH MICA BASED SURFACING LAYER**

(57) The invention relates to a multilayer prepreg comprising a first and a second fiber prepreg, one or two micaceous prepregs and B staged thermosetting resin, which may be different for each layer or identical. The micaceous prepregs are positioned on the top (outside) of the fiber prepregs. There may be plurality of further fiber prepregs. The micaceous prepregs preferably comprise mica flakes in the form of a mica paper. The use of such prepreg as surfacing layer at the top of a composite material or near the top of a composite material can determine an improvement in burn-through and fire retardancy performance of composite materials. It is also disclosed a cured composite panel, such as an aircraft part, obtainable by curing the multilayer prepreg to a C stage.

Fig. 1

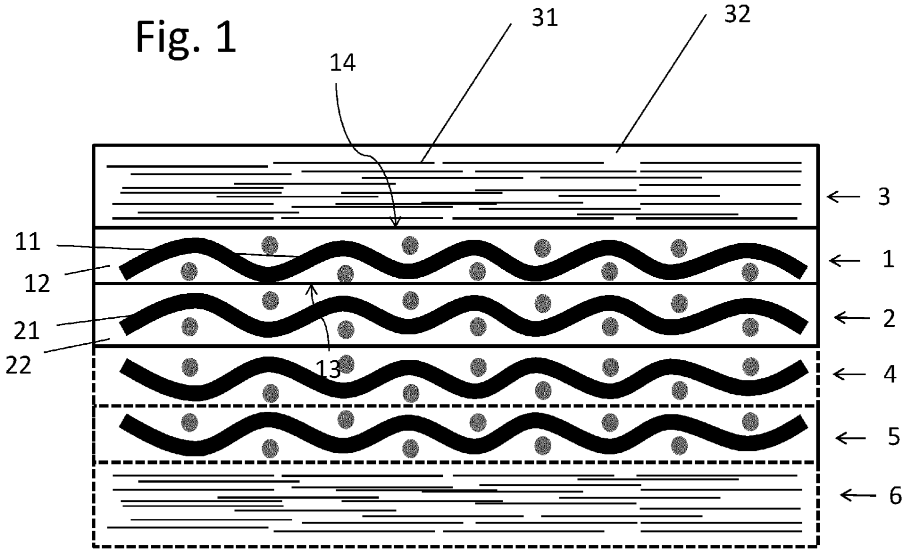


EP 3 967 490 A1

(52) Cooperative Patent Classification (CPC): (Cont.)
B32B 2260/023; B32B 2260/025; B32B 2260/046;
B32B 2262/101; B32B 2262/106; B32B 2262/108;
B32B 2264/1026; B32B 2264/201;
B32B 2264/303; B32B 2264/308;
B32B 2307/3065; B32B 2307/718; B32B 2605/18;
C08J 2300/24; C08J 2363/00

## Description

Background

The large mass transportation industry, including aircraft, railway and marine has always strived to reduce the weight of the structural parts in view of fuel economy. This problem has led for example especially the aircraft industry to use lightweight materials and this strive has become even more pronounced with the climate discussion. A main approach for reducing parts weight has been to replace heavier weight metal (in particular aluminum) parts by respective composite parts made of fiber-reinforced thermoset resin. Composite parts made of fiber-reinforced thermoset resin are used for structural applications and for interior of passenger cabins. These parts are customarily made starting from so-called prepregs, which are sheets or reinforcing fiber impregnated with a thermosetting resin in the B-stage. The prepreg is moulded into the eventual shape of the part in a hot press or autoclave, applying temperature and simultaneously vacuum and or pressure, in order to cure the thermosetting resin to the final rigid C stage. Individual glass or carbon fiber reinforced prepregs containing a thermosetting resin are available on the market and commonly used in several large mass transportation applications.

However, since the introduction of such composite parts for cabin interior applications, especially in the commercial aircraft, fire became a major safety hazard requiring attention from all the certification authorities. In particular commonly used thermoset resins such as phenol-formaldehyde or epoxy resins, are readily flammable. The heat, smoke and gases released by such a burning resins and the degradation in structural integrity of the composite parts can quickly jeopardize the safety of an aircraft. Specifically, the Federal Aviation Administration (FAA) have issued several regulations to certify the usage of composite materials that are listed into the FAR 25.853. Those regulations applicable to materials for usage in cabin interiors would allow materials with very high fire resistance or fire retardant properties to be used only.

Some materials, if simply applied as a cover layer of aircraft structures (conventional metallic or composite), could potentially provide protection against a fire scenario. The major aircraft companies for instance added thermal insulation blankets inside the walls of the fuselage structure, demonstrating that such solution will resist burn-through and provide protection to passengers from the fire for at least 5 minutes, even without insulation. Thermal insulating layers may delay the temperature rise and reduce the heat transfer through a structure; however, layers that are suitable for this purpose are associated with significant increases in weight. This in turn re-increases the aircraft's weight and may negatively affect the fuel economy and maintainability of the aircraft.

EP 0 373 137 A2 discloses a fireproof construction element comprising a mica paper impregnated with a thermosetting resin. This publication has no preference for the employed amount of mica per square meter. Some exemplary embodiments refer to laminates comprising a mica paper supported by a fine glass fabric of 34 g/m$^2$ and impregnated with resins. The resin content is claimed in a range of 5% to 40% and a silicone resin is preferably used in the range of 10% to 15%.

US 2002/0017590 A1 discloses such an insulation system for aircraft fuselage for increasing burn-through resistance of aircraft fuselages, comprising a first insulation layer and a second insulation layer and first interleaf layer. The insulation layers may be glass fiber containing layer. The insulation layer may preferably comprise a reflective platelet-like mineral such as vermiculite. The first interleaf layer is "intermediate" (= sandwiched by) the first and a second insulation layer (see the figures and associated description). This insulation system is not a prepreg because no B-staged thermosetting resins are included.

WO 01/98434 A1 also discloses such an insulation system essentially in the form of a "mat", consisting of one or more layers of fibres surrounded by a sheath which comprises at least a first support, preferably made of an organic material with characteristics sealing and anti-condensation systems, and an impregnated mica paper. The mica paper preferably has a weight per unit area of less than 50 g/m$^2$ and the mica flakes preferably have a form factor (ratio of diameter to thickness) of greater than 1000. The impregnation is an organic resin such as silicone resin. This barrier product is not a prepreg either as no B staged thermosetting resins are mentioned.

US 5,595,817 A discloses a flame penetration blocker for fuselages comprising a composite of a 100 g/m$^2$ to 600 g/m$^2$ phlogopite or muscovite mica paper having laminated on at least one side thereof a 30 to 300 g/m$^2$ needled fabric layer composed of flame retardant fibres, the mica paper being bonded to the needled fabric layer with a partially cross-linked, latently adhesive binding agent that is a component of the mica paper itself. The "needled fabric layer" is apparently non-woven.

WO 2011/051090 A1 discloses a fireproof plastic construction part for aircraft. The plastic construction part comprises a substrate with a duroplastic or thermoset resin and at least one mica-containing layer applied thereonto. The substrate is preferably a composite comprising reinforcing fibres. One exemplary embodiment comprises two prepregs of epoxy resin impregnated glass fabric with a Nomex core sandwiched in between, and a neat mica paper laminated directly thereonto. The amount of mica is preferably less than 50 g/m$^2$ of substrate surface.

Micaceous insulation products have been used in lithium lion batteries in view of preventing thermal runaway. GB 2 568 688 A e.g. discloses a fire-protecting composite material for protecting lithium lion batteries from thermal

runaway, comprising a single fibrous core which is laminated between at least two "phyllosilicate insulation" layers, each comprising phyllosilicate minerals (which may be mica paper), optionally in amounts of > 50% by weight of the insulation material, optional scrim layers, and optionally also fillers and/or binders and/or fibres. Other publications which disclose micaceous insulation products for lithium ion batteries and comprising a single, not impregnated, compressible fibrous layer are WO 2017/042308 A1 and WO 2018/011384 A1.

In the field of rotating electrical machines there have long been known the so-called "resin-rich" micaceous insulation tapes. These typically consist of a backing glass cloth, a mica paper adhered thereto and a B-staged resin (in particular an epoxy resin) embedding the glass cloth and the mica paper. Such resin-rich tapes are customarily provided wound-up on a spool, normally with co-use of a separator tape to prevent the sticking together of the individual fabric/mica turns. Such resin-rich tape is wound in the B-stage around the winding of the electrical machine, optionally with overlap, following which the winding including the resin-rich insulation tape is heated under pressure to form a thermoset, mica-containing electrical insulation.

Another problem arises when a part is to be made from multiple layers of a prepreg. It is possible that with only one layer of prepreg the achievable thickness in the finished part may be insufficient. It is well known in the composite manufacturing industry to stack several layers of prepreg atop of each other in order to obtain increased thicknesses in the finished part. Such stacking entails the problem that air may remain entrapped at the boundaries between adjacent prepreg layers after having been stacked atop of each other. A boundary with such air inclusions is a site of lowered mechanical strength in the cured, finished part. If the individual prepreg layers exhibit some degree of tackiness at their surface, which is desirable in view of their adhesion to each other for forming the multilayered prepreg stack, the extent of inclusion of air at the boundaries becomes more pronounced. The easier way of curing such multilayered prepregs with removal of most entrapped gas is curing under vacuum, such as in a vacuum bag, which however may become insufficient at higher amounts of air inclusion. The technically more demanding curing under pressure may become necessary in those cases. An overview of the problems associated with the curing of multilayer prepregs is found in the section "Problem to be solved by the invention" of US 10,647,828 B2.

State-of-the art solution and materials based on impregnated Mica are based on silicone based prepreg or other prepreg that traditionally are free of tackiness. Then although they provide some fire barrier properties, such prepreg can not be used in the industry for co-curing with other traditional stack of prepregs, without resulting in a cured composite panel with high amount of air inclusion, low interlaminar shear strength properties and low resistance to impact. A composite with low interlaminar shear strength at the interface between the prepreg layer comprising Mica and the prepreg nearby would cause cracks and failure of the parts in case of application of impact resulting from passenger abuse, or loads due to extra weight and aircraft manoeuvres. Examples of composite parts requiring high structural properties, high interlaminar shear strength values, low weight and good resistance to fire are the aircraft floor panels as instance or seat components such as seat backs and seat pads.

There is thus still a need specifically in the aerospace industry for a fire resistant and fire retardant multilayered composite which is also mouldable into an aircraft part, such as for a cabin or seats structure, while providing structural properties, limited weight addition and low cost manufacturing processes.

## Summary of the invention

The invention provides a prepreg material comprising at least:

- a Mica based layer comprising at least a thermoset resin and Mica
- a fiber layer comprising at least a thermoset resin and reinforcement fibers.

The invention also provides a method for manufacturing said multilayer prepreg.

The invention still furthermore relates to a cured composite panel obtainable by curing the multilayer prepreg.

The invention also relates to a method for manufacturing said cured composite panel.

Preferred embodiments of each of the above objects are as in the respective dependent claims.

## Brief description of the figures

Fig. 1 is schematic cross-sectional view of a multilayer prepreg of the invention or of a composite panel of the invention.

## Detailed description of the invention

With reference to Fig. 1 the multilayered prepreg of the invention comprises a first fiber layer-containing prepreg 1 comprising first reinforcing fibers 11 and a B-staged first thermosetting resin 12, a second fiber layer-containing prepreg

2 comprising second reinforcing fibers 21 and a B-staged second thermosetting resin 22, and a first micaceous prepreg 3 comprising a first micaceous layer 31 and a B-staged second thermosetting resin 32 and optionally a second micaceous prepreg. Thermosetting resins 12, 22 and 32 may have the same resin composition or different resin composition. Optionally, as indicated with the dashed boxes, the multilayer prepreg of the invention may comprise one or more further fiber layer-containing prepreg layers 4,5, of similar or same construction as the first and second fiber layer-containing prepregs 1,2. The multilayer prepreg of the invention may also optionally comprise, instead of or in addition to, the foregoing further fiber containing prepregs, a second micaceous prepreg 6, of similar or same construction as the first micaceous prepregs 3. The optional second micaceous prepreg 6 and the first micaceous prepreg 3 sandwich in between them all fiber layer-containing prepregs.

The individual components are explained in the following sections.

Fiber prepregs 1,2 and optionally 4,5

Each of the fiber prepregs comprises reinforcement fibers. The reinforcement fibers include glass, carbon or graphite fibers with a high tensile strength. The tensile strength of all reinforcement fibers is preferably at least 3000 MPa, more preferably they have a tensile strength in the range of 3500 to 10000 MPA, more preferably of 3500 to 6000 MPa. The reinforcement fibers may be in the form of continuous tows made up of multiple filaments, as continuous unidirectional or multidirectional tapes, or as woven fabrics. Moreover, the fibers may be sized or unsized. Preferably for all fiber layer -containing prepregs the reinforcement fibers are in the form of a fiber layer, such as a woven fabric layer. The fiber layer preferably has an areal weight ranging from 100 $g/m^2$ to 400 $g/m^2$ and/or a thickness in the range of 0.1 mm to 0.4 mm (as measurable with a thickness gauge, such as a caliper, under 0.2 bar overpressure). More preferably the woven fabric layer is in the form of a satin weave, most preferably fulfilling all the foregoing features. The preferred fiber material for any of the foregoing fiber embodiments is glass, namely E-glass, S-glass or basalt. The most preferred examples for the fiber layer are U.S. style 7781 E-glass fabric and U.S. style 6580 S-glass fabric.

The content of the reinforcement fibers in any of the fiber prepregs is preferably within the range 30% to 70% by volume, more preferably 50% to 65% by volume, based on the fiber prepreg.

The first and second fiber prepregs are arranged immediately adjacent to each other without any micaceous layer being arranged in between any of them. The multilayered prepreg of the invention may optionally comprise one or more further fiber prepregs, also provided that these are arranged immediately adjacent to each other and immediately adjacent to the first fiber layer-containing prepreg, without any micaceous layer being arranged in between any of them. If there are further prepregs, then their number is preferably from 1 to 10, more preferably from 1 to 5. This gives, including the mandatory first and second fiber prepregs, 3 to 12 and 3 to 7 fiber prepregs, respectively, as preferred embodiments.

The first fiber prepreg, second fiber prepreg, and the optional one or more further fiber prepregs also comprise, besides the reinforcement fibers, an impregnated, partially cured B staged thermosetting resin. These thermosetting resins are exemplified below. Preferably each of the fiber prepregs consists to at least 98% by weight, more preferably to 100% by weight, of the sum of reinforcement fibers and the impregnated B-staged thermosetting resin.

First micaceous prepreg 3 and optional second micaceous prepreg 6

The micaceous prepreg(s) 3,6 comprise(s) a micaceous layer 31 in the form of a particulate sheet silicate (phyllosilicate) of the mica group. The sheet silicate is more preferably in the form of flakes, such as mica flakes. Examples of the sheet silicate of the mica group are phlogopite, muscovite, fluorophlogopite, biotite, lepidolite, margarite, glauconite or combinations of two or more of these.

The first micaceous layer 31 provides the sheet silicate, such as mica, to the first micaceous prepreg 3 in an amount of at least 50 g per square meter ($g/m^2$), preferably of 50 g to 200 g per square meter, more preferably of 55 to 100 g per square meter, it being understood that "per square meter" refers to a square meter of the second surface 14 to which the first micaceous prepreg is adjacent. Preferably the weight per unit area of the mica paper is from 55 $g/m^2$ to 100 $g/m^2$, especially where limited weight addition is required, such as in aircraft applications.

The first micaceous layer may optionally also comprise a first supporting glass screen, preferably a lightweight one. More preferably this first supporting glass screen exhibits 20 g to 50 g per square meter of its own geometric surface.

The second micaceous layer preferably provides the sheet silicate, such as mica, in an amount of at least 50 g per square meter ($g/m^2$), more preferably of 50 g to 200 g per square meter, still more preferably of 55 to 100 g per square meter, it being understood that "per square meter" refers to a square meter of the first surface 13 towards which the second micaceous prepreg faces. Preferably the weight per unit area of the mica paper is from 55 $g/m^2$ to 100 $g/m^2$, especially where limited weight addition is required, such as in aircraft applications.

The second micaceous layer may optionally also comprise a second supporting glass screen, preferably a lightweight one. More preferably this second supporting glass screen exhibits 20 g to 50 g per square meter of its own geometric surface.

The sheet silicate, such as mica flakes, may be non-expanding or expanding if subjected to high temperature or fire. The expansion hereafter refers to a mechanism where the material increases its volume because of the application of heat. Expansion may help to decrease the thermal conductivity of the top layer, thus improving the thermal and fire protection of the composite substrate. Examples of thermally expandable mica flakes are uncalcined mica flakes. Uncalcined mica flakes are customarily produced from mica by a hydromechanical process. Particularly preferred for the purposes of the invention are flakes of expandable mica, such as flakes of uncalcined phlogopite.

Most preferably the mica layer comprises the mica, such as expandable mica flakes of uncalcined phlogopite, in the form of a mica paper. With the term "mica paper" is understood in the context of the present invention a sheet comprising at least 95% by weight and preferably near, or equal to, 100% by weight, based on the sheet, of mica in the form of oriented flakes.

Such mica paper is generally produced by reducing the mica extracted from the mines in flakes to particles, which can be done by mechanical disintegration under water, and treating the pulp thus obtained on a machine similar to papermaking (Fourdrinier) machines. An example of such mica paper production is described in CH274605A.

In these known manufacturing processes to make such mica papers it is necessary to use a pulp of mica flakes of which 90% by volume will be less than 800 microns. In addition, these flakes would need to have a specific range of thickness to create a Mica layer that act as fire retardant barrier. Thus in one embodiment of the present invention the range of Mica flakes diameter and thickness is such that the shape factor (i.e. diameter divided by thickness) is lower than 1000 and preferably lower than 500. On the other hand, the shape factor will generally be at least 100. The typical mean diameter of uncalcined mica flakes is 500 $\mu$m and the typical mean thickness is 1.5 $\mu$m, leading to a shape factor of about 330. For the purposes of the invention any diameters, thicknesses and shape factors of flakes are determined as described in EXAMPLE 1.

The inventors believe that the use of mica flakes with a shape factor in a range as indicated above allows to manufacture a prepreg material and then a cured composite panel with a low amount of resin in the Mica layer and high tackiness. It is believed that the use of calcined flakes with a shape factor higher than 1000 would result in a mica based prepreg with low tack and then not suitable for curing. On the other side a prepreg with very high resin content would be more tacky, but then this would create an excess of thermoset resin in the final cured composite panel. Said resin excess results in low fire properties and specifically high vertical burning self-extinguishing time and high heat release values. Said higher resin content would have also impacted the burn-through behaviour and increased the possibility to have fire penetration through the composite panel.

The mica paper so obtained is devoid of any supporting layer, such as a supporting glass fabric, and is usable in this form for the purposes of the invention. Commercial types of mica paper which may comprise such supporting layer are however also usable in the invention.

Optionally the micaceous prepreg(s) also comprise(s) a lightweight supporting fiber layer to facilitate the impregnation process and handling of said micaceous prepreg(s). When this lightweight supporting fiber layer is present this is preferably a glass fabric. When this lightweight supporting fiber layer is present this is more preferably a glass fabric in an amount of 20 to 35 grams per square meter.

The micaceous prepreg(s) also comprise(s), besides the sheet silicate, a B-staged thermosetting resin as exemplified below and impregnating the sheet silicate. It was in particular found that the B-staged thermosetting resin is present in an amount of from 40% to 60% and more preferable from 45% to 55% by weight based on the total weight of the respective micaceous prepreg. It is believed that a lower resin content would result in a prepreg with low tack and then no suitable for the construction of Fig. 1, while too high resin content would result in a prepreg with low resistance to fire. The micaceous prepreg(s) preferably consist(s) to at least 98% by weight, more preferably to 100% by weight, of the sum of sheet silicate and the impregnated B-staged thermosetting resin.

It was in particular found that at least 40% resin in the first micaceous layer, based on that first micaceous layer, is required to obtain good interlaminar shear strength at the interface between the first micaceous prepreg and the first fiber prepreg.

The interlaminar shear strength characteristic describes the shear strength between the layer comprising the fiber prepreg and the layer comprising the micaceous prepreg once the multilayer pregreg of the current invention is cured to a C stage. The interlaminar shear strength of laminates with a thermoset matrix, for example, those made of epoxy resin, is typically determined using a short beam shear test (SBS). The ASTM D2344 is a standard testing method to determine the apparent interlaminar shear strength of parallel fiber reinforced composites cured to a C stage.

The thickness of each fiber prepreg including its B staged thermosetting resin is preferably in the range of 0.2 to 0.6 mm, more preferably in the range of 0.3 to 0.5 mm.

The thickness of each micaceous prepreg including its B staged thermosetting resin is preferably in the range of 0.2 to 0.6 mm, more preferably in the range of 0.3 to 0.5 mm.

The optional second micaceous prepregs may have a constitution differing from the one of the first micaceous prepreg, or may have the same constitution. The latter is preferred.

The thermosetting resin(s)

The following explanations apply to the thermosetting resin as present in each of the fiber prepregs and in the first and optional second micaceous prepreg. Generally, as used herein, "thermosetting resin" means the resin as initially synthesized, in the A-stage without any notable curing having yet occurred. In the partially cured stage, as present in any of the prepreg layers, it has the prefix "B stage" or "B staged". The fully cured resin(s), as present in the inventive composite panel, is(are) designated herein as "C staged thermosetting resin" or as "thermoset resin".

The thermosetting resin is a thermally curable system and has high tack at ambient temperature.

The thermosetting resin may be the same for all prepregs or be different for the prepreg(s) containing the micaceous layer and the other fiber prepregs. Preferably it is the same in all prepregs of the inventive multilayer prepreg.

The thermosetting resin is generally a resin that comprises functional groups in an amount and of a type such as to allow covalent crosslinking upon heating, optionally with co-use of hardeners or radical initiators, depending on the type of crosslinkable functional groups, while remaining essentially unreactive at room temperature.

The thermoset resin (or resin composition) for impregnating/infusing the reinforcement fibers is preferably a hardenable or thermosettable resin containing one or more uncured thermoset resins, which include, but are not limited to, epoxy resins, imides (such as polyimide or bismaleimide), vinyl ester resins, cyanate ester resins, isocyanate modified epoxy resins, phenolic resins, furanic resins, benzoxazines, formaldehyde condensate resins (such as with urea, melamine or phenol), polyesters, acrylics, hybrids, blends and combinations thereof.

Commercially available epoxy resins suitable for use in the host resin matrix include Novolac resins preferably of viscosity 8-20 Pa·s at 25°C; glycidyl ethers of phenol Novolac resins (e.g. DEN 431 or DEN 438 from Dow); dicyclopentadiene-based phenolic Novolac (e.g. Tactix 556 from Huntsman); diglycidyl 1,2-phthalate (e.g. GLY CEL A-100); diglycidyl derivative of dihydroxy diphenyl methane (Bisphenol F) (e.g. PY 306 from Huntsman). Other epoxy resins include cycloaliphatics such as 3',4'-epoxycyclohexyl-3,4-epoxycyclohexane carboxylate (e.g. CY 179 from Huntsman).

The addition of curing agent(s) and/or catalyst(s) in the curable matrix resin is optional, but the use of such may increase the cure rate and/or reduce the cure temperatures, if desired.

The thermosetting resin may contain some toughening elements, such as amorphous thermoplastic based polymers such as polyetherimide, polyimide or polyethersulfones that can be added in the resin composition during the mixing process to form a toughened thermally curable resin system with increased tackiness and the resin toughness thus increasing the impact resistance properties of the final cure composite laminates.

Preferred thermosetting resins are epoxy resins. Suitable epoxy resins include polyglycidyl derivatives of aromatic diamine, aromatic mono primary amines, aminophenols, polyhydric phenols, polyhydric alcohols, polycarboxylic acids. The epoxy resin is preferably a composition including from 50 to 70 weight percent of an epoxy resin component that includes one or more epoxy resins. Difunctional, trifunctional and tetrafunctional epoxy resins may be used.

A more preferred group of thermosetting epoxy resins are glycidyl ethers of a novolac, comprising or consisting of moieties having the formula (I):

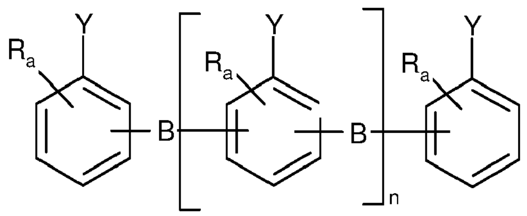

(I)

wherein

- $R_a$ is either always hydrogen or always methyl;
- B is either always *-$CH_2$-** or always

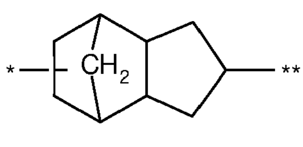

;

- a fraction of 0.8 to 0.99 of the Y moieties are -O-glycidyl, and the remainder of the Y moieties being essentially OH,

monovalent residues of the structure *-O-$CH_2$-CH(OH)-$CH_2$-OH or divalent bridging spacers of the structure *-O-$CH_2$-CH(OH)-$CH_2$-O-** connecting two moieties according to above formula (I).

and wherein said Novolac glycidyl ether has an epoxy equivalent weight EEW in the range of 160 to 270 g/eq. Commercial examples of the foregoing are DEN 431 and DEN 438 from Dow and Tactix 556 from Huntsman.

Other more preferred thermosetting epoxy resins are diglycidyl 1,2-phthalate (e.g. GLYCEL A-100); reaction products of dihydroxy diphenyl methane (Bisphenol F) with epichlorhydrin (e.g. PY 306 from Huntsman), and epoxy-containing cycloaliphatics such as 3',4'-epoxycyclohexyl-3,4-epoxycyclohexane carboxylate (e.g. CY 179 from Huntsman).

The thermosetting resin preferably has, before any curing to a B-stage, a viscosity of 8-20 Pa·s at 25°C as measurable with a Brookfield viscometer (paddle method, 200 rpm).

The thermosetting resin may also include a curing agent, hardener and/or accelerant.

In the case of epoxy resins the curing agent is typically dicyandiamide.

If a latent curing accelerator is used in thermosetting epoxy resins then it is preferably an urea derivative of the formula (II) :

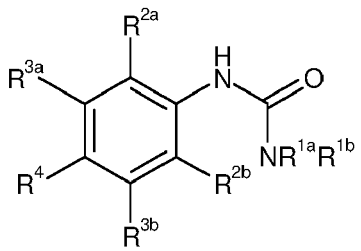

(II)

wherein

$R^{1a}$ and $R^{1b}$ may be equal or different and are individually selected from the group of hydrogen, $C_1$-$C_6$-alkyl and $C_3$-$C_6$-cycloalkyl; or $R^{1a}$ and $R^{1b}$ taken together with the nitrogen atom to which they are attached form a heterocyclic substituent selected from the group consisting of aziridinyl, azetidinyl, pyrrolidinyl and piperidinyl;
$R^{2a}$ and $R^{2b}$ are equal or different and are individually selected from the group consisting of hydrogen and $C_1$-$C_6$-alkyl; and
$R^{3a}$, $R^{3b}$ and $R^4$ are equal or different and are individually selected from the group consisting of hydrogen, halogen, $C_1$-$C_6$-alkyl, $C_1$-$C_6$-alkoxy, -C(O)$R^5$, - N(H)-C(O)-N$R^{1a}R^{1b}$, -CN, $NO_2$, trifluoromethyl, -SO$R^6$ and $SO_2R^6$; wherein $R^5$ is selected from the group consisting of hydrogen, $C_1$-$C_6$-alkyl, $C_1$-$C_6$-alkoxy, $C_3$-$C_6$-cycloalkyl and N$R^{1a}R^{1b}$, and $R^6$ is selected from the group consisting of $C_1$-$C_6$-alkyl, $C_1$-$C_6$-alkoxy and $C_3$-$C_6$-cycloalkyl.

Preferably in formula (II), $R^{1a}$ and $R^{1b}$ are equal or different and are both $C_1$-$C_6$-alkyl; more preferably, they are both the same $C_1$-$C_6$-alkyl; and most preferably they are both methyl. Preferably in formula (II), $R^{2a}$ and $R^{2b}$ are different and one of them is hydrogen and the other one is $C_1$-$C_6$-alkyl; more preferably, one of $R^{2a}$ and $R^{2b}$ is hydrogen and the other is methyl. Preferably in formula (II), one of $R^{3a}$ and $R^{3b}$ is hydrogen and the other one is selected from the group consisting of - C(O)$R^5$, -N(H)-C(O)-N$R^{1a}R^{1b}$, -CN, -SO$R^6$ and $SO_2R^6$, more preferably one of $R^{3a}$ and $R^{3b}$ is -N(H)-C(O)-N$R^{1a}R^{1b}$ and the other one is hydrogen. Preferably in formula (II), $R^4$ is hydrogen or $C_1$-$C_6$-alkyl.

These accelerators as such are conventional and some are commercially available. For such accelerators reference is made e.g. to formula (II) of US4283520A, to formula (I) of GB1192790A and to GB2300187A; these publications being included herein by reference.

A more preferred subgroup of compounds of formula (II) have in combination:

- $R^{1a}$ and $R^{1b}$ are both methyl;
- one of $R^{2a}$ and $R^{2b}$ is hydrogen and the other is methyl;
- one of $R^{3a}$ and $R^{3b}$ is -N(H)-C(O)-N$R^{1a}R^{1b}$ and the other one is hydrogen; and
- $R^4$ is hydrogen.

If dicyandiamide is used in the preferred thermosetting epoxy resins without above urea derivative of formula (II), then the molar amount of dicyandiamide, $m_e$, is preferably in the range of 10 to 20mol%, more preferably of 15 to 20 mol%, dicyandiamide with respect to the total amount of epoxy units, wherein said $m_e$ is calculable by the formula

$$m_e \equiv 100 \frac{m_{dicy}}{MW_{dicy}} \Big/ \frac{m_g}{EEW_g}$$

wherein

$MW_{dicy}$ is the molecular weight (in g / mol) of dicyandiamide;
$EEW_g$ is the epoxide equivalent weight (in g / eq.) of the Novolac glycidyl ether (I); and
$m_{dicy}$ and $m_g$ $m_{dicy}$ are the amounts (in g) of dicyandiamide and of the Novolac glycidyl ether (I), respectively.

In one more preferable example of this invention the thermoset resin comprises a glycidyl ether of a Novolac resin, as exemplified above, dicyandiamide and an urea derivative of formula (II) as exemplified above. In this case then above $m_e$ is preferably in the range of 2.0 to 5.0 mol%, more preferably of 3.0 to 4.0 mol%, dicyandiamide with respect to the total amount of epoxy units. Also here, the amount of dicyandiamide is preferably in the range of 0.3 to 2.0 weight%, more preferably 0.5 to 1.5 weight%, based on the overall composition, and the co-used urea derivative of formula (II) is preferably co-used in an amount of 3 to 7 weight%, more preferably of 4 to 6 weight%, based on the overall composition.
Preferably the thermosetting resin 12,22 also comprises one or more flame retardant liquid or solid additives. These are more preferably selected from the group consisting of:

a) compounds of the following formula (III):

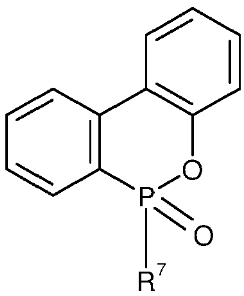

(III)

wherein $R^7$ is selected from the group consisting of hydrogen, alkyl and - $(CH_2)_pCOO(CH_2)_qCH_3$, wherein p and q are integers of from 2 to 4;
b) aluminium trihydroxide or magnesium hydroxide;
c) ammonium polyphosphate; and
d) a phosphate of the general formula (IV):

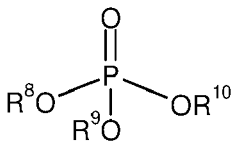

(IV)

wherein $R^8$, $R^9$ and $R^{10}$ may be the same or different and are individually selected from $C_{1-8}$alkyl and phenyl.

Fire retardants a) are commercially available and known e.g. from DE2646218A1, incorporated herein by reference. Preferably therein, $R^7$ is either hydrogen or $-(CH_2)_2COO(CH_2)_3CH_3$. The total amount of fire retardants a), if present, is preferably in the range of 3 to 10 % by weight, based on the thermosetting resin. More preferably, there is either 4 to 8 % by weight of compound (III) with $R^7 = -(CH_2)_2COO(CH_2)_3CH_3$ alone, or a combination of 2 to 5 % by weight of compound (III) with $R^7 = -(CH_2)_2COO(CH_2)_3CH_3$ and 4 to 6 % by weight of compound (III) with $R^7$ = H.
Fire retardants b) are actually hydrated oxides, that is $MgO * H_2O$ and $Al_2O_3 * 3\ H_2O$. When subject to elevated temperatures they dehydrate to become inert (non-combustible) MgO and $Al_2O_3$, respectively. This dehydration reaction is endothermic and consumes fire heat; the released water acts as a heat reducing agent to hinder fire spread. Fire retardant b) is preferably a powder milled or micronized down to a powder having particle size distribution such that $D_{90}$

is 20 micrometres, that is, 90% of the particles have at the most 20 micrometres particle size. Fire retardant b), if present, is preferably used in an amount of 10 to 25 % by weight, based on the thermosetting resin.

Fire retardants c) are commercially available and may be made, as customary in the art, by reacting phosphoric acid (54% $P_2O_5$ or higher, such as orthophosphoric acid) with gaseous ammonia, whereby the neutralisation heat, evaporates the water and dehydrates the ammonium polyphosphate, followed by granulation in a pugmill or rotary granulator. Fire retardant c), if present, is preferably used in an amount of 2 to 15 % by weight, based on the thermosetting resin.

Fire retardants d) are commercially available. Preferably in formula (IV), $R^8$, $R^9$ and $R^{10}$ are the same. More preferably they are all butyl. Fire retardant d), if present, is preferably used in an amount of 2 to 4 % by weight, based on the thermosetting resin.

Preferably, the thermosetting resin comprises at least one of the fire retardants a) and b), and optionally also c) and/or d).

More preferably the thermosetting resin comprises a combination of:

As fire retardant a) 4 to 8 % by weight, based on the thermosetting resin, of compound (III) with $R^7$ = $-(CH_2)_2COO(CH_2)_3CH_3$ alone, or a combination of 2 to 5 % by weight, based on the thermosetting resin, of compound (III) with $R^7$ = $-(CH_2)_2COO(CH_2)_3CH_3$ and 4 to 8 % by weight of compound (III) with $R^7$ = H; as fire retardant b) 10 to 25 % by weight, based on the thermosetting resin, of aluminium trihydroxide;
optionally as fire retardant c) 2 to 6 % by weight, based on the thermosetting resin, of ammonium polyphosphate; and
optionally as fire retardant d) 2 to 5 % by weight, based on the thermosetting resin, of tributyl phosphate.

Further examples flame retardants and smoke suppressants to impart specific flame retardant properties are metal oxides, zinc borate and phosphorous modified epoxy resins.

The thermosetting resin may also include additional ingredients such as ceramic microspheres, and/or performance enhancing or modifying agents. The performance enhancing or modifying agents, by way of example, may be selected from flexibilisers, toughening agents/particles, additional accelerators, core shell rubbers, UV stabilizers/additives, viscosity modifiers/flow control agents and wetting agents.

The thermosetting resin may also include a reaction product of a diglycidyl ether of bisphenol A and/or bisphenol F with a carboxy-terminated nitrile rubber as a tackifier. The term "carboxy-terminated nitrile rubber" (abbreviated CTNB) is customary in the art and refers to a butadiene-acrylonitrile rubber which has been end-capped by e.g. using organometallic reagents (in particular dilithium organometallic reagents such as butyldilithium) followed by quenching with carbon dioxide. More preferably here the starting carboxy-terminated nitrile rubber is a liquid at room temperature. Said reaction product is preferably employed in amounts of 10 to 25 % by weight, more preferably of 3 to 6 % by weight, based on the thermosetting resin. The reaction product of such CTNB with said diglycidyl ether of Bisphenol A or F is also known and may typically be done at a weight ratio of 1 to 10 parts by weight of CTNB per 100 parts by weight of diglycidyl ether of Bisphenol A or F.

The thermosetting resin may also include, as an air-release additive, a polyether-modified methyl alkyl polysiloxane copolymer having the structure of formula (VI):

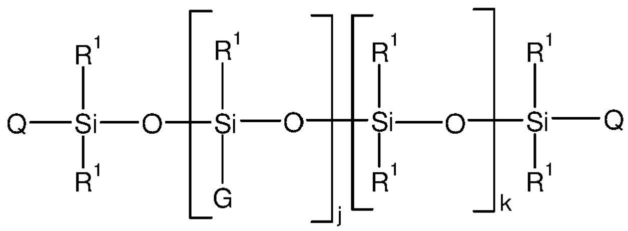

(VI)

wherein

$R^1$ is a linear or branched monovalent $C_{1-10}$ alkyl group, in particular methyl;
G is a monovalent polyoxyalkylene group having the formula (VII):

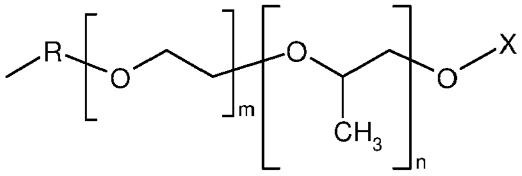

(VII)

wherein R is a divalent $C_{2-20}$ alkylene radical; X is selected from the group consisting of hydrogen and a linear or branched $C_{1-6}$ alkyl group; m is an integer in the range from 2 to 50; and n is an integer in the range of 0 to 50; and the sequence of the ethoxylene and 2-propoxylene units may be in blocks or random;

Q is $R^1$ or G, preferably is $R^1$, most preferably is methyl;
j is an integer in the range of 1 to 20; and
k is an integer in the range of 0 to 200.

Said air-releasing polyether-modified methyl alkyl polysiloxane copolymer is preferably employed in amounts of 0.1 to 1 % by weight based on the thermosetting resin. Examples therefor have been known e.g. from EP 0 341 952 A1, other examples therefor are marketed as defoamers, e.g. by Byk.

It was in particular found that inclusion into anyone of the abovementioned thermosetting resins, in particular into the abovementioned epoxy resins, of a combination of

i) the above mentioned tackifying reaction product of a diglycidyl ether of bisphenol A and/or bisphenol F and
ii) the above mentioned air-releasing polyether-modified methyl alkyl polysiloxane copolymer

allows to produce fabric-containing prepreg layers with tacky surface which can be stacked to a multilayered prepreg which exhibits sufficiently low inclusion of air at the boundaries of the prepregs to allow curing under the simpler vacuum technique. The resulting cured composite layers exhibit high interlaminar shear strength values and resistance to impact

The amounts of above i) and ii), when used in combination, are preferably in the range of 5 to 25% by weight and 0.1 to 1% by weight, respectively, or more preferably 10 to 20% by weight and 0.2 to 0.7% by weight, respectively, and still more preferably 10 to 15% by weight and 0.2 to 0.5% by weight, respectively, based on the overall thermosetting resin.

The invention also relates to methods for manufacturing the multilayer prepreg of the invention.

The first method initially produces individual prepregs from a micaceous layer and two or more reinforcing fiber layers, that is, each of the micaceous layer and reinforcing fiber layers is individually impregnated with thermosetting resin, and each of the impregnated layers is individually cured to the B-stage. The curing conditions, in particular the curing temperature and time, depend on the type of thermosetting resin impregnated into the reinforcing fabric and mica layer(s) and is easily determinable for the skilled person based on the desired degree of tackiness of the multilayered prepreg. This method is applicable for thermosetting resins being different in each layer or being identical in all layers. The individual B staged prepregs are then stacked atop each other in the ordering sequence according to the invention. The residual tackiness allows for sufficient adhesion between the individual prepregs. Preferably here, for the production of each of the impregnated layers the thermosetting resin is first coated in neat form on a planar support, such as a PET foil or a paper, at controlled grammage and then this resin film is used to impregnate the micaceous layer(s) and/or the reinforcing fiber layers. The impregnation is then done preferably at somewhat elevated temperature, such as 100° to 150° C depending on the thermosetting resin, to lower the viscosity of the resin sufficiently such as to impregnate the micaceous layer(s) and the reinforcing fiber layers. Alternatively the resin(s) is(are) first dissolved or suspended in a solvent, preferably by a known volume or weight dilution factor to keep track of the applied grammage, to lower the viscosity and then the resin solution(s) or dispersion(s) is(are) used for directly impregnating the respective micaceous layer(s) and/or the reinforcing fiber layers at room temperature or temperatures generally below 100°C. The solvent is then dried away, heating to individual B-staged prepregs that contains generally low amount of residual volatiles, generally less than 5% by weight of the final prepreg.

The second method is applicable in those cases the thermosetting resin is identical in all layers of the multilayer prepreg. This method employs resin transfer. In this method, a number of layers of reinforcement fibers corresponding to the number of the reinforcing fiber-containing prepregs in the multilayer prepreg of the invention, and the required number of micaceous layers (such as mica papers) are stacked in the appropriate order atop of each other, such that, if there are two micaceous layers, they sandwich in between them all layers of reinforcement fibers. The layered composite so obtained is then transferred to a vacuum bag and is impregnated with the help of vacuum in one single step with the

thermosetting resin by infusing or injecting the thermosetting resin. Thermosetting resins suitable for infusion or injection are available in the markets. However, the inventors have a preference for the formulated resin systems providing low viscosity, long pot-life and good self-extinguishing properties.

The impregnated layered composite so obtained may be cured either again under vacuum or under pressure, to a B staged multilayered prepreg of the invention.

There is however no need to immediately cure the multilayered prepreg to a C staged product. Latent hardeners and/or accelerators for the thermosetting resin may be chosen, as is customary in the art, with a sufficient degree of latency to allow storage of the multilayered prepreg of the invention under refrigerated conditions or possibly even at room temperature for a reasonable shelf life.

The invention also relates to a composite panel obtainable from the multilayer prepreg of the invention.

As "composite panel" is understood here a multilayer prepreg of the invention which has been cured to a C stage, so that it contains at least thermoset resin(s). The composite panel of the invention may optionally comprise, besides the C staged multilayer prepreg of the invention, a core of another material, such as of a polyurethane or rubber foam or honeycomb. The core may impart more volume to the composite panel, help in further reducing weight and/or facilitate moulding into a desired shape of the composite panel (see below). The C staged multilayer prepreg will typically completely embed the optional core. Alternatively, if the inventive multilayer prepreg comprises a sufficient number of further fiber prepregs, it may be cured and moulded directly and without co-use of such a core to the intended part as exemplified above. If the multilayer prepreg contains only one micaceous layer then that micaceous layer will preferably eventually face to the outside of the core-containing composite panel, that is, towards the environment. The composite panel of the invention may find application in several mass transportation applications including but not limited to aircraft and railway applications. It may be in the form of a surfacing layer at the top of a composite material or near the top of a composite material, such as an aircraft part. Examples therefor are on the one hand aircraft exterior primary and secondary structures, including but not limited to fuselage, wings, nacelles, or engine fire protection sheaths. Other preferred embodiments of the composite panel of the invention are parts of aircraft interior structures such as fuselage interior fire protection, floor panels, cargo compartment liners, cabin walls and composite sandwiches that would benefits from the use of such invention in light of the improved Fire, Smoke and Toxicity (FST) performance and reduced Heat release (HR) values. Other applications include as way of examples some components of aircraft seats. The inventive C staged composite panel exhibits no fire penetration during a burn-through test performed for 5 minutes at a temperature of 1100°C. The inventive composite panel can determine, at the same time, improved burn-through performance and improved fire retardancy of the cured composite material.

The inventive composite panel is also illustrated by Fig. 1 and associated explanations, with the exception that any B-staged thermosetting resins 12,22,32 are converted to corresponding C staged thermoset resins, and that the figure does not show the optional core embedded therein. The first micaceous prepreg 3 and optional second micaceous prepreg 6 act, after curing to a C stage, as fire barrier when exposed to fire. They provide to the composite panel the ability to resist to more than 5 minutes if exposed to a temperature of about 1100°C. They also provide a reduction of the temperature transferred to the composite panel and then a delayed in the combustion process. They still furthermore provide improvement in the FST, meaning reduced flame time, reduced smoke and toxicity gas emission, as well as reduced HR (heat release) values of the composite panel in case of a fire event. They even still further provide a delay of the peak of the heat release in case of fire by 30sec or more depending on the grammage of the micaceous layer contained therein.

The invention also relates to a method for producing such composite panel.

The conversion of the multilayer prepreg of the invention to such composite panel may be done analogously as with prior art prepregs. In one variant the B staged multilayer prepreg of the invention may be inserted into the plates or the forming moulds of a hot press, optionally with co-use of a compressible core to facilitate the drape of the multilayer prepreg to the moulds, and be cured under heat and pressure to the C staged composite panel.

The term "forming mould" is understood here as a set of at least two rigid heat-resistant parts, such as of ceramic or steel, each of which parts has a moulding surface and at least one mating surface intended to snugly fit one of the mating surfaces of one or more other parts of the set, such that, when all parts of the set are joined together in the absence of the multilayer prepreg and in snugly fit over their mating surfaces, their moulding surfaces together form a cavity corresponding to the shape of a part to be moulded, and when all parts of the set are joined together over their mating surfaces with the multilayer prepreg of the invention laying on or inserted into one or more of the moulding surfaces, they snugly fit upon applying pressure and sufficient heat such as to initially soften the B staged resin(s) of the enclosed multilayer prepreg.

In another variant the process for producing the multilayer prepreg of the invention using vacuum and one single impregnating resin as described may be done, but by then using more stringent curing conditions to obtain direct curing to a C staged composite panel of the invention.

Curing to a C stage is preferably carried out at elevated temperature up to 180 °C, preferably in the range of 120 °C - 160 °C, and with use of elevated pressure to restrain deforming effects of escaping gases, or to restrain void

formation, suitably at pressure of up to 10 bar (1 MPa), preferably in the range of 3 bar (0.3 MPa) to 7 bar (0.7 MPa). Preferably, the cure temperature is attained by heating two molds of a press at a specific temperature. Post-curing at temperatures in the range of 160 °C to 200 °C and atmospheric pressure may be performed, employing suitable heating rates to improve the glass transition temperature of the C staged resin matrix.

The invention is now further illustrated by the following non-limiting examples.

EXAMPLE 1: Measurement of shape of mica flakes

The procedure starts from mica paper as understood in the present invention. A sample of the mica paper is diluted in demineralized water and sonicated with ultrasound at room temperature for 30 minutes. A drop of solution is deposited on a silicon support. After drying, the mica flakes are observed in a SEM and digitally photographed in 8 bit grayscale. 10 pictures are taken at different sites of the dried drop at a magnification of 1000x. On each image the Feret diameter of all mica particles along all possible directions in steps of 5° is determined by pixel colour intensity using the image processing software ImageJ and the average is formed therefrom, to give the "diameter of the mica particles" as understood in the present invention. The "thickness of the mica flakes" as understood in the present application is also determined from SEM photographs at a magnification of 1000x with the dried mica sample positioned vertically. The "shape factor of the mica flakes" as understood in the present application is then formed by dividing said diameter by said thickness.

EXAMPLE 2: Thermosetting resins for impregnation of mica layer and/or fabric layer(s).

*Table 1. Thermosetting resin composition for impregnation of mica layer and/or fabric layer(s).*

| Component No. | Component | Thermosetting resin 1 (weight % based on overall resin composition) | Thermosetting resin 2 (weight % based on overall resin composition) |
|---|---|---|---|
| 1 | Novolac glycidyl ether EEW 172-179 g/eq. (epoxy resin) | 56.7 | 53.0 |
| 2 | Polyether-modified methyl alkyl polysiloxane copolymer (air release additive) | 0.2 | 0.5 |
| 3 | Nitrile rubber modified DGEBA EEW 195 g/eq (tackifier) | 11.8 | 15.0 |
| 4 | Dicyandiamide (hardener) | 4.2 | 4.5 |
| 5 | 2,4-bis(dimethylaminocarbonyl-amino)toluene (urea derivative of formula (II), $R^{1a} = R^{1b}$ = methyl; $R^{2a}/R^{2b}$ = hydrogen/methyl or methyl/hydrogen; $R^{3a}/R^{3b}$ = hydrogen/-N(H)-C(O)-N$(CH_3)_2$ or -N(H)-C(O)-N$(CH_3)_2$/hydrogen; $R^4$ = hydrogen | 1.8 | 2.0 |
| 6 | 6*H*-dibenz[c,e][1,2]oxaphosphotin-6-propanoic acid, butyl ester, 6-oxide (fire retardant a) of formula (III), with $R^7 = -(CH_2)_2COO(CH_2)_3CH_3$ | 3.2 | 5.0 |
| 7 | 9,10-dihydro-9-oxa-10-phosphaphenanthrene-10-oxide (fire retardant a) of formula (III), with $R^7$ = hydrogen) | 5.3 | 0.0 |
| 8 | $Al(OH)_3$ fire retardant | 10.5 | 20.0 |
| 9 | ammonium polyphosphate crystal modification II (fire retardant c)) | 3.7 | 0.0 |
| 10 | tributyl phosphate (fire retardant d)) | 2.6 | 0.0 |
| | Total | 100.0 | 100.0 |

Components no.'s 1, 2 and 3 are mixed with stirring at 40-50°C for 20 minutes. Then component no.'s 6 and 7 are mixed thereto with stirring for a further 15-20 minutes at the same temperature. Then component no. 4 is added with stirring for a further 20-30 minutes at the same temperature. Finally, component no. 5, is mixed thereto with stirring

for a further 15-20 minutes at the same temperature. The obtained resin formulations may be directly used for prepreg manufacture (see EXAMPLE 3 below). Alternatively, the formulations may be cooled down to room temperature or refrigerated for storage.

EXAMPLE 3: Preparation of fiber layer-containing prepreg

Thermosetting resin 2 of Table 1 from EXAMPLE 2 is used. The prepreg is prepared on a Menzel type impregnator. The resin is applied in neat (solvent-free) form at a temperature of 55°C using a doctor blade in a film of fine thickness onto a PET carrier foil. The doctor blade is fed with fresh resin from a bath from which it flows to the doctor blade by its own gravity. The level of resin in the bath is kept constant with a sensor and, if necessary, the bath is replenished by a pump from a reservoir. The thickness of the applied film is given by the gap between the doctor blade and the carrier foil. The resin content of the final prepreg is directly related to the thickness of the resin film on the PET carrier foil. The thickness of the resin film is chosen such that its weight per unit area of the PET carrier foil is about two thirds of the weight per unit area of the fabric to be included into the prepreg, which in this case is an E-glass fabric of 296 g/m$^2$ (US type 7781). The fabric is superimposed to the resin film on the PET carrier foil at 100°C, whereby the glass fabric immerses into the semi-solid formulation film and is impregnated due to the wicking capability of the resin, which is improved here due to the polyether-modified methyl alkyl polysiloxane copolymer present in the resin. The impregnated fiber layer so obtained contains about 200 g/m$^2$, thus about 40% by weight, of thermosetting resin. It is passed through a drying oven, kept at 140°C, for a residence time typically in the range of 4 to 6 min, whereby the extent of B-stage curing of the resin and tackiness may be controlled by choosing the appropriate residence time. The final B-staging may be manually controlled or be measured by DSC. The fiber layer-containing prepreg so obtained has a weight per unit area of about 495 g/m$^2$ after peeling off the PET carrier foil. It may be wound up on a roll with the PET film still thereupon as a separator foil, in order to prevent the wound-up prepreg layers from sticking together.

EXAMPLE 4: Preparation of micaceous prepreg.

The same procedure is followed as in EXAMPLE 3, except that, a mica paper type of 120 g/m$^2$ containing uncalcined, expandable Muscovite flakes, is applied thereonto instead of the US 7781 style glass fabric. The micaceous prepreg so made thus contains about 45% by weight of B-staged resin. The resulting prepreg has sufficient tack for further use as layer of a stacking sequence suitable for final curing.

EXAMPLE 5: Preparation of multilayered prepregs and curing thereof to a composite product in the form of a flameproof sheet

Three multilayered prepregs are built up as follows (table rows indicate the order in which the prepreg layers are stacked atop of each other):

*Table 2. Built up of the multilayered prepregs.*

| Multilayer prepreg 1 (control) | Multilayer prepreg 2 | Multilayer prepreg 3 |
|---|---|---|
| -- | first micaceous prepreg: as in EXAMPLE 4 | first micaceous prepreg: as in EXAMPLE 4 |
| first fiber prepreg: as in EXAMPLE 3 | first fiber prepreg: as in EXAMPLE 3 | first fiber prepreg: as in EXAMPLE 3 |
| second fiber prepreg: as in EXAMPLE 3 | second fiber prepreg: as in EXAMPLE 3 | second fiber prepreg: as in EXAMPLE 3 |
| one further fiber prepreg: | one further fiber prepreg: | one further fiber prepreg: |
| as in EXAMPLE 3 | as in EXAMPLE 3 | as in EXAMPLE 3 |
| -- | -- | second micaceous prepreg: as in EXAMPLE 4 |

All three B staged multilayer prepregs are cured at 160°C for 20 min in a vacuum bag to respective C staged inventive composite panels 2 and 3 (from multilayer prepreg 2 and 3, respectively) or to a C staged control composite panel 1 (from multilayer prepreg 1). All composite panels were subject to tests as described below.

*Table 3.*

| Tests (standards) | Number of tested samples; dimension of each sample | Tested property | Sample | | |
|---|---|---|---|---|---|
| | | | Control composite panel 5.1 | Inventive composite panel 5.2 | Inventive composite panel 5.3 |
| 12 sec vertical burning test (25.853 Part Ia) | 3; 75 mm x 300 mm | Extinguishing time (s) | 23 | 11 | 13 |
| | | Burn length sample (mm) | 87 | 57 | 57 |
| 60 sec vertical burning test (25.853 Part Ia) | 3; 75 mm x 300 mm | Extinguishing time (s) | 5 | 2 | 0 |
| | | Burn length sample (mm) | 138 | 105 | 68 |
| OSU test (25.853 Part V) | 3; 150 mm x 150 mm | Peak heat release rate (kW/m$^2$) | 111 | 92 | 78 |
| | | Time to peak heat release (s) | 40 | 66 | 73 |
| Fire penetration (ISO ure to sta g a temperature of 1100 ± 80°C and a heat flux density equal to 116 ± 10 kW/m$^2$. | 3; 665 mm x 665 mm | Time to penetration (min) | 2.5 | None in 15 | None in 15 |

The results are surprising as the use of mica was not expected to provide a fire retardant behaviour while used in a thermosetting based composite laminate. The prior art used silicone resin in combination with mica to achieve good self-extinguishing properties. The instant result is surprising as it uses an epoxy based thermosetting system that has traditionally high tendency to burn and high heat release comparing to prior art silicone resin. The tests show that the inventive composite panel, whether containing only one micaceous cured layer 3 or two micaceous cured layers 3,6, has the required fire resistance capabilities, as in either case during the test no fire penetration occurred within the 15 minutes of fire exposure. The control composite panel 1 showed fire penetration after only 150sec from the start of the test.

EXAMPLE 6: Composite panel manufacturing through vacuum resin infusion

A commercial one-component epoxy isocyanate resin (BLENDUR IK01 marketed by Covestro), either a basalt-based fabric or a US style 7781 glass fabric, and a Mica paper of a grammage of 160 g/m$^2$ were used. Six layers of basalt (or glass) fabric were stacked atop of each other and, optionally, a mica paper layer was arranged to the one side of the basalt (or glass) fibre layer stack. Then all layered, still resin-free composites were closed under a vacuum bag and the epoxy isocyanate resin was infused under vacuum in order to impregnate the entire layered composites simultaneously. The impregnated layered composites were then cured at 160°C for 20min directly to the C-stage. The total resin content of the resulting composite panels was in all cases approximatively 40% by weight. Those layered composites that did contain mica paper provided during the curing B-staged multilayer prepregs of the invention as a transient intermediate and then C-staged composite panels of the invention. The obtained composite panels were thus built up as follows (table rows indicate the order in which the layers are stacked atop of each other before impregnation:

*Table 4*

| composite panel 6.1 (control) | composite panel 6.2 | composite panel 6.3 (control) | composite panel 6.4 |
|---|---|---|---|
| -- | first micaceous cured layer | -- | first micaceous cured layer |
| first basalt fiber-containing cured layer | first basalt fiber-containing cured layer | first glass fiber-containing cured layer | first glass fiber-containing cured layer |
| second basalt fiber-containing cured layer | second basalt fiber-containing cured layer | second glass fiber-containing cured layer | second glass fiber-containing cured layer |
| third further basalt fiber-containing cured layer | third further basalt fiber-containing cured layer | third further glass fiber-containing cured layers | third further glass fiber-containing cured layers |

(continued)

| composite panel 6.1 (control) | composite panel 6.2 | composite panel 6.3 (control) | composite panel 6.4 |
|---|---|---|---|
| fourth further basalt fiber-containing cured layer | fourth further basalt fiber-containing cured layer | fourth further glass fiber-containing cured layer | fourth further glass fiber-containing cured layer |
| fifth further basalt fiber-containing cured layer | fifth further basalt fiber-containing cured layer | fifth further glass fiber-containing cured layer | fifth further glass fiber-containing cured layer |
| sixth further basalt fiber-containing cured layer | sixth further basalt fiber-containing cured layer | sixth further glass fiber-containing cured layer | sixth further glass fiber-containing cured layer |

All four composite panels were subject to a fire penetration test analogous as the one described in above Table 4. It emerged that inventive composite panels 6.2 and 6.4 exhibited a small burning length and no fire penetration after 5 minutes, whereas control composite panels 6.1 and 6.3 exhibited visible burning and fire penetration after a short time.

## Claims

**1.** A multilayer prepreg, comprising:

a) A first fiber prepreg (1) comprising a first surface (13), a second surface (14) and first reinforcement fibers (11) impregnated with a first B staged thermosetting resin (12);
b) adjacent to the first surface (13) of the first fiber prepreg (1) a second fiber prepreg (2) comprising second reinforcement fibers (21) impregnated with a second B staged thermosetting resin (22); and
c) adjacent to the second surface (14) of the first fiber prepreg (1) a first micaceous prepreg (3) comprising a first micaceous layer (31) in an amount of at least 50 g per square meter (g/$m^2$) and being impregnated with a third B staged curable thermosetting resin (32) in an amount of at least 40% by weight based on the first micaceous prepreg (3).

**2.** The multilayer prepreg of claim 1, comprising adjacent to the second fiber prepreg (2) one or more further fiber prepregs (4,5) each comprising further reinforcement fibers impregnated with a further thermosetting resin.

**3.** The multilayer prepreg of claim 1 or 2, comprising a second micaceous prepreg (6) comprising a second micaceous layer and being impregnated with a still further B staged thermosetting resin, such that first micaceous prepreg (3) and second micaceous prepreg (6) sandwich in between all fiber prepregs (1,2,4,5), and wherein the second micaceous prepreg (6) preferably has the same constitution as the first micaceous prepreg (3).

**4.** The multilayer prepreg of any one of claims 1 to 3, wherein the first micaceous layer (31) comprises mica in an amount of 50 g to 200 g per square meter, preferably 55 to 100 g per square meter (g/$m^2$) and the second micaceous layer comprises mica in an amount of 50 g to 200 g per square meter, preferably 55 to 100 g per square meter (g/$m^2$).

**5.** The multilayer prepreg of any one of claims 1 to 4, wherein the first micaceous prepreg (3) comprises and the second micaceous prepreg (6) comprises mica in the form of mica flakes.

**6.** The multilayer prepreg of claim 5 where the mica flakes are uncalcined mica flakes.

**7.** The multilayer prepreg of claims 1 to 6, wherein the first micaceous prepreg (3) comprises a first supporting glass screeen and/or the second micaceous prepreg (6) comprises a second supporting glass screen.

**8.** The multilayer prepreg of anyone of claims 1 to 7, wherein all B staged thermosetting resins (12,22,32) comprise a flame retardant additive, being preferably selected from the group consisting of:

a) compounds of the following formula (III):

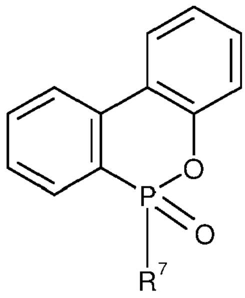

(III)

wherein R is selected from the group consisting of hydrogen, alkyl and - $(CH_2)_pCOO(CH_2)_qCH_3$, wherein p and q are integers of from 2 to 4;

b) aluminium trihydroxide or magnesium hydroxide;

c) ammonium polyphosphate; and

d) a phosphate of the general formula (IV):

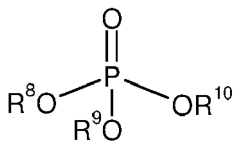

(IV)

wherein $R^8$, $R^9$ and $R^{10}$ may be the same or different and are individually selected from $C_{1-8}$alkyl and phenyl.

**9.** The multilayer prepreg of anyone of claims 1 to 8, wherein all B staged thermosetting resins (12,22,32) comprise a combination of

i) a reaction product of a diglycidyl ether of bisphenol A and/or bisphenol F with a carboxy-terminated nitrile rubber, and

ii) a polyether-modified methyl alkyl polysiloxane copolymer having the structure of formula (VI):

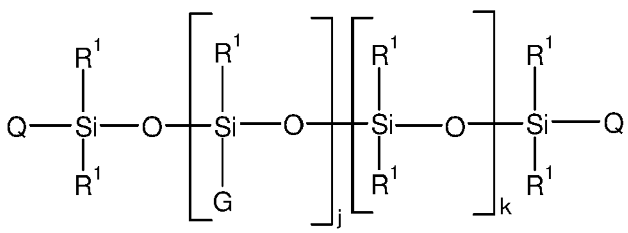

(VI)

wherein

$R^1$ is a linear or branched monovalent $C_{1-10}$ alkyl group, in particular methyl; G is a monovalent polyoxyalkylene group having the formula (VII):

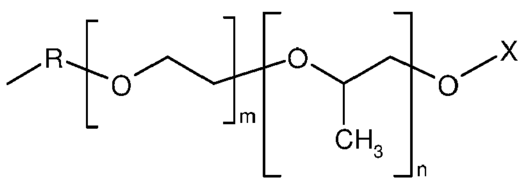

(VII)

wherein R is a divalent $C_{2-20}$ alkylene radical; X is selected from the group consisting of hydrogen and a linear or branched $C_{1-6}$ alkyl group; m is an integer in the range from 2 to 50; and n is an integer in the range of 0 to 50; and the sequence of the oxyethylene and 2-oxypropylene units may be in blocks or random;
Q is $R^1$ or G, preferably is $R^1$, most preferably is methyl;
j is an integer in the range of 1 to 20; and
k is an integer in the range of 0 to 200;

and in each B staged thermosetting resin (12,22,32) the amounts of i) and ii) are preferably in the range of 10 to 20 by weight and 0.1 to 1.0 % by weight, respectively, based on the amount of that B-staged thermosetting resin.

**10.** The multilayer prepreg of anyone of claims 1 to 9, wherein all B staged thermosetting resins (12,22,32) are selected from the group consisting of imides (such as polyimides and bismaleimides), formaldehyde condensate resins (such as with urea, melamine or phenol), epoxy resins (unmodified or isocyanate-modified), free radical crosslinkable resins (such as unsaturated polyesters, acrylics or vinyl ester resins), cyanate ester resins, furanic resins, benzoxazines, hybrids, blends and combinations thereof.

**11.** The multilayer prepreg of anyone of claims 1 to 10, wherein all B staged thermosetting resins are B staged epoxy resins.

**12.** The multilayer prepreg of anyone of claims 1 to 11, wherein all B staged thermosetting resins (12,22,32) are identical.

**13.** A process for preparing the multilayer prepreg of claim 1, comprising the steps of:

a) providing first reinforcement fibers (11), impregnating the first reinforcement fibers (11) with a first thermosetting resin (12), and curing the resin-impregnated reinforcement fibers (11) to a B stage to obtain a first fiber prepreg (1) with a first surface (13) and a second surface (14);
b) providing second reinforcement fibers (21), impregnating the second reinforcement fibers (21) with a second thermosetting resin (22), and curing the resin-impregnated reinforcement fibers (21) to a B stage to obtain a second fiber prepreg (2);
c) optionally, providing further reinforcement fibers and one or more further thermosetting resins, impregnating further reinforcement fibers with the one or more further thermosetting resins, and curing further resin(s)-impregnated further reinforcement fibers (21) to a B stage to obtain one or more further fiber prepregs (4,5) each comprising further reinforcement fibers impregnated with one further B staged thermosetting resin;
d) providing a first micaceous layer (31) comprising mica in an amount of at least 50 g per square meter ($g/m^2$), impregnating the first micaceous layer (31) with a third thermosetting resin (32), and curing the resin-impregnated first micaceous layer (31) to a B stage to obtain a first micaceous prepreg (3);
e) optionally providing a second micaceous layer comprising mica in an amount of at least 50 g per square meter ($g/m^2$), impregnating the second micaceous layer with a still further thermosetting resin, and curing the still further resin-impregnated second micaceous layer to a B stage to obtain a second micaceous prepreg (6);
whereby the order of a), b), optional c), d) and optional e) is arbitrary; and
f) arranging the second fiber prepreg (2) adjacent to the first surface (13);
g) arranging the first micaceous prepreg (3) adjacent to the second surface (14);
h) optionally, if step c) is carried out, arranging the one or more further fiber prepregs (4,5) adjacent to the second fiber prepreg (2) and adjacent to each other;
i) optionally, if step e) is carried out, arranging the second micaceous prepreg (6) either

- adjacent to the second fiber prepreg (2), if step c) is not carried out, or
- adjacent to the one or more further fiber prepregs (4,5) such that first micaceous prepreg (3) and second micaceous prepreg (6) sandwich in between all fiber prepregs (1,2,4,5), if step c) is carried out.

**14.** A process for preparing the multilayer prepreg of claim 1, where the step of making a first micaceous layer (3) or second micaceous prepreg (6) both comprising mica in an amount of at least 50 g per square meter ($g/m^2$) comprises also providing as additional lightweight supporting fiber layer and impregnating both the Mica and the fiber layer with the same thermoset resin.

**15.** A process for preparing the multilayer prepreg of claim 1, comprising the steps of:

i) providing first reinforcement fibers (11) in the form of a layer having a first surface (13) and a second surface (14);

ii) providing second reinforcement fibers (21);
iii) optionally, providing further reinforcement fibers;
iv) providing a first micaceous layer (31) comprising mica in an amount of at least 50 g per square meter ($g/m^2$)
v) optionally providing a second micaceous layer comprising mica in an amount of at least 50 g per square meter ($g/m^2$)
whereby the order of i), ii), optional iii), iv) and optional v) is arbitrary; and
vi) arranging the second reinforcement fibers (21) adjacent to the first surface (13);
vii) arranging the first micaceous layer (31) adjacent to the second surface (14);
viii) optionally, if step iii) is carried out, arranging the further reinforcement fibers adjacent to the second reinforcement fibers (21);
ix) optionally, if step v) is carried out, arranging the second micaceous layer either

- adjacent to the second reinforcement fibers (21), if step iii) is not carried out, or
- adjacent to the further reinforcement fibers such that first micaceous layer (31) and second micaceous layer sandwich in between all reinforcement fibers, if step iii) is carried out;

x) placing the layered composite comprising all reinforcing fibers and all micaceous layers in a vacuum;
xi) impregnating the layered composite under vacuum with a thermosetting resin; and
xii) curing the impregnated layered composite to a B stage, to obtain the multilayer prepreg of claim 12.

**16.** A composite panel obtainable by the steps of

1) providing a multilayer prepreg according to any one of claims 1 to 12;
2) optionally, providing a core and enveloping the core by the multilayer prepreg; and
3) curing the optionally core-containing multilayer prepreg to a C stage in a forming mould using heat and pressure.

**17.** The composite panel of claim 16, which is in the form of an aircraft part.

**18.** A process for producing the composite panel of claim 16 or 17, comprising the steps of:

1) providing a multilayer prepreg according to any one of claims 1 to 12;
2) optionally, providing a core and enveloping the core by the multilayer prepreg; and
3) curing the optionally core-containing multilayer prepreg to a C stage in a forming mould using heat and pressure.

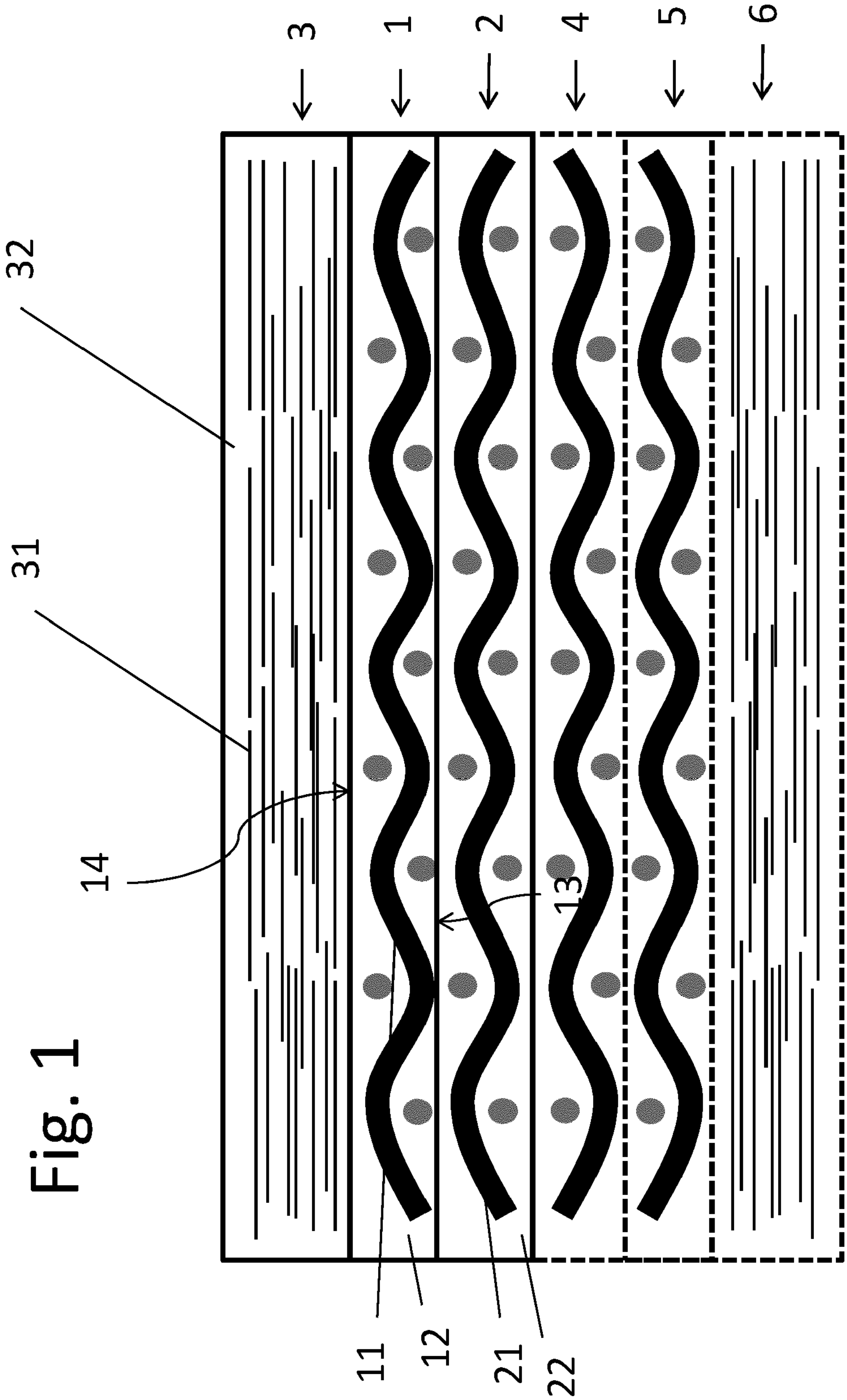


Fig. 1

Europäisches Patentamt
European Patent Office
Office européen des brevets

# EUROPEAN SEARCH REPORT

Application Number
EP 20 19 5378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/208005 A1 (TURANSKI PETER [DE] ET AL) 16 August 2012 (2012-08-16) * paragraphs [0002], [0016], [0021], [0023], [0031], [0032]; claims 1-4,8-11; examples * ----- | 1-16 | INV. B32B19/02 B32B19/06 B32B5/26 C08J5/24 |
| A | US 2014/338830 A1 (PETROSKI JOHN A [US]) 20 November 2014 (2014-11-20) * paragraphs [0001], [0012], [0015], [0019] - [0025]; claims 1-7,15,17; figures * ----- | 1-16 | |
| A | CN 111 284 035 A (SUZHOU SILVER NEW ENERGY COMPOSITE MAT CO LTD) 16 June 2020 (2020-06-16) * abstract * ----- | 1-16 | |
| A | US 2010/136280 A1 (MORMONT DANIEL [BE] ET AL) 3 June 2010 (2010-06-03) * paragraphs [0001], [0002], [0017], [0020], [0021], [0025], [0028], [0033] - [0035]; claims 11,13-21,24,27,28; example 1 * ----- | 1-16 | TECHNICAL FIELDS SEARCHED (IPC) C08J B32B |
| A | US 5 595 817 A (SCHAEFER WERNER [DE] ET AL) 21 January 1997 (1997-01-21) * column 1, lines 6-8; claims 1,3,13 * ----- | 1-16 | |

The present search report has been drawn up for all claims

1

| Place of search | Date of completion of the search | Examiner |
|---|---|---|
| Munich | 5 July 2021 | Pamies Olle, Silvia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 20 19 5378

This annex lists the patent family members relating to the patent documents cited in the above-mentioned European search report. The members are as contained in the European Patent Office EDP file on
The European Patent Office is in no way liable for these particulars which are merely given for the purpose of information.

05-07-2021

| Patent document cited in search report | Publication date | Patent family member(s) | Publication date |
|---|---|---|---|
| US 2012208005 A1 | 16-08-2012 | DE 102009050787 A1 | 05-05-2011 |
| | | EP 2493687 A1 | 05-09-2012 |
| | | US 2012208005 A1 | 16-08-2012 |
| | | US 2018230281 A1 | 16-08-2018 |
| | | WO 2011051090 A1 | 05-05-2011 |
| US 2014338830 A1 | 20-11-2014 | NONE | |
| CN 111284035 A | 16-06-2020 | NONE | |
| US 2010136280 A1 | 03-06-2010 | AT 274562 T | 15-09-2004 |
| | | AU 6571901 A | 02-01-2002 |
| | | DE 60105156 T2 | 14-07-2005 |
| | | EP 1292652 A1 | 19-03-2003 |
| | | ES 2227217 T3 | 01-04-2005 |
| | | PT 1292652 E | 31-01-2005 |
| | | US 2003170418 A1 | 11-09-2003 |
| | | US 2010136280 A1 | 03-06-2010 |
| | | WO 0198434 A1 | 27-12-2001 |
| US 5595817 A | 21-01-1997 | BR 9502774 A | 09-01-1996 |
| | | CA 2145099 A1 | 14-12-1995 |
| | | CN 1118755 A | 20-03-1996 |
| | | DE 4420613 C1 | 10-08-1995 |
| | | EP 0687555 A2 | 20-12-1995 |
| | | FI 952877 A | 14-12-1995 |
| | | JP H081851 A | 09-01-1996 |
| | | JP 2633818 B2 | 23-07-1997 |
| | | US 5595817 A | 21-01-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0373137 A2
- US 20020017590 A1
- WO 0198434 A1
- US 5595817 A
- WO 2011051090 A1
- GB 2568688 A
- WO 2017042308 A1
- WO 2018011384 A1
- US 10647828 B2
- CH 274605 A
- US 4283520 A
- GB 1192790 A
- GB 2300187 A
- DE 2646218 A1
- EP 0341952 A1